Europäisches Patentamt

European Patent Office

Office européen des brevets

(11) Publication number: **0 216 737 B1**

# EUROPEAN PATENT SPECIFICATION

(45) Date of publication of patent specification: **07.08.91**   (51) Int. Cl.⁵: **G01F 23/68, G01F 23/30**

(21) Application number: **86830262.1**

(22) Date of filing: **24.09.86**

(54) **Electric fuel gauge for motor vehicle tanks, particularly for tanks of plastics material.**

(30) Priority: **25.09.85 IT 5385185 U**

(43) Date of publication of application:
**01.04.87 Bulletin 87/14**

(45) Publication of the grant of the patent:
**07.08.91 Bulletin 91/32**

(84) Designated Contracting States:
**DE FR GB**

(56) References cited:
**FR-A- 2 509 044**
**FR-A- 2 517 054**

(73) Proprietor: **SICEB S.p.A.**
**Via Rio Galletto 1**
**I-17045 Legino (Savona)(IT)**

(72) Inventor: **Piacenza, Claudio**
**C/o SICEB S.p.A. Via Bruno Buozzi**
**I-17045 Savona-Legino (Savona)(IT)**

(74) Representative: **Notaro, Giancarlo et al**
**c/o Jacobacci-Casetta & Perani S.p.A. Via**
**Alfieri, 17**
**I-10121 Torino(IT)**

Rank Xerox (UK) Business Services

## Description

The present invention relates to an electric fuel gauge, particularly for tanks of plastics material.

The device of the present invention is of the type comprising a tubular support member having a length corresponding substantially to the height of a tank and intended to be located vertically within the tank in use, the tubular member having means at its upper end for fixing it to the tank, a float slidable axially within the tubular member, and a rheostat comprising a resistor and a sliding contact unit cooperating with each other and movable relative to each other as a result of the vertical movement of the float in order to provide an electrical signal indicative of the fuel level.(See, for example, FR-A-2517054 and FR-A-2509044).

Such fuel gauges, of the so-called "tube" type, are used to advantage in tanks of pressed sheet metal or plastics material since they enable a correct indication of the fuel level to be given which is not influenced by accidental variations in the level caused by jerks or changes of direction of the motor vehicle in which the tank is installed.

When gauges of this type are installed in tanks of plastics material it is noticed that, following an accident which causes a violent bump on the walls of the tank, the tubular member of the gauge comes partly or completely out, drawing with it the means for fixing it to the tank and consequently causing a dangerous discharge of fuel. If the behaviour of a tank of plastics material, which is normally made by the blow-moulding method, in a collision is investigated, it is noted that, after a lateral collision, the bottom of the tank undergoes downward flexure followed immediately by upward flexure, because of the resilience of the tank itself. As a result of the upward flexure, the bottom of the tank exerts a violent compressive force on the tubular member of the electric fuel gauge, with the resultant disengagement of the fixing means of the tubular element from the upper wall of the tank, thus putting the interior of the tank into communication with the external environment.

The object of the present invention is to provide an electric fuel gauge of the type mentioned above which does not have this disadvantage and which is also simple and cheap to manufacture.

According to the invention, this object is achieved in a device of the above-mentioned type by virtue of the fact that the tubular member can open up as a result of the application of an axial compressive load of a magnitude greater than a predetermined threshold.

By virtue of this characteristic, following a violent bump on the tank as a result of an accident, there is no longer a danger of fuel flowing out of the hole in the tank in which the fuel gauge is fitted and fixed, since the tubular member is broken as a result of the collision and prevents the separation of the fixing means from the tank.

Preferably, the bottom end of the tubular member has an associated pusher member which is movable axially inwardly of the tubular member to force its walls radially outwardly as a result of the application of an axial compressive load.

According to a preferred embodiment the invention, the means for fixing to the tank comprise a hollow stopper fixable to the upper wall of the tank and a slider slidable telescopically in the stopper and carrying the sliding contact unit of the rheostat, the slider being fixed to the tubular member and being acted upon by resilient means biassing the tubular member axially away from the stopper.

Thus, the gauge is always in contact with the bottom of the tank and enables a signal of the fuel level to be provided which is not influenced by inevitable flexure of the bottom of the tank due to the weight of the fuel and any thermal expansion. Moreover, by virtue of this characteristic, the gauge can be fitted to tanks of different heights without the need for adaptations or modifications.

Further advantages and characteristics of the gauge according to the invention will become clear from the detailed description which follows, purely by way of non-limiting example, with reference to the appended drawings, in which:

Figure 1 is an exploded perspective view of the device of the invention,

Figure 2 is an axial sectional view of the device of Figure 1,

Figure 3 is a sectional view taken on the line III-III of Figure 2,

Figure 4 is a sectional view taken on the line IV-IV of Figure 2,

Figure 5 is a sectional view taken on the line V-V of Figure 2, and

Figure 6 is a sectional view taken on the line VI-VI of Figure 2.

In the following description, the spatial references are intended to relate to the assembled condition of the gauge within a fuel tank (not illustrated) of a motor vehicle.

With reference to the drawings, an electric fuel gauge is generally indicated 10 and comprises a tubular support member 11 and an assembly 12 for fixing it to the tank. The assembly 12 comprises a hollow stopper 13 in which a cylindrical slider 14 carrying two contact blades 15 is slidable axially. Between the stopper 13 and the slider 14 are interposed two helical compression springs 46 which, being in contact at their lower ends with the ends of the blades 15, ensure their electrical connection to blade connectors 47 projecting from the upper part of the stopper 13. The slider 14 has two diametrally-opposed radial projections 16 at its lower end.

The tubular member 11 is constituted by two wholly identical semi-cylindrical portions 17 with mating edges 18 and 19.

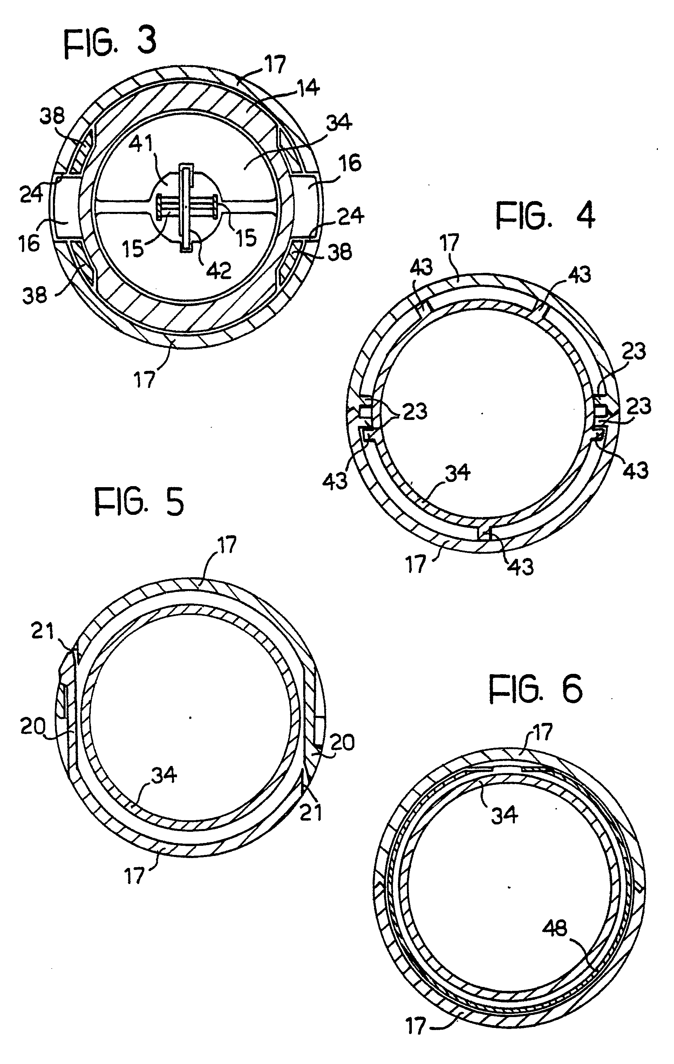

As shown in Figures 4 and 6, the edges 18 and 19 have complementary V-shaped engagement surfaces. In correspondence with its edges 18 and 19 respectively, each portion 17 also has a hook appendage 20 disposed tangentially of and perpendicular to the edge 18, and an aperture 21. The inner surface of each portion 17 has an internal seat 22 and axial ribs 23 located close to the edges 18 and 19.

At its upper end 11a, the tubular member 11 has two diametrally-opposed apertures 24 each constituted by facing notches 24a in the edges 19 and 18 of the portions 17. At its lower end 11b, the tubular member 11 has an end edge 26 with a frusto-conical surface 27 the conicity of which faces the stopper 13. Adjacent the surface 27, the tubular member 11 has a second frusto-conical surface 28 with its conicity facing away from the stopper 13 so as to define, with the surface 27, an annular internal end shoulder of triangular section.

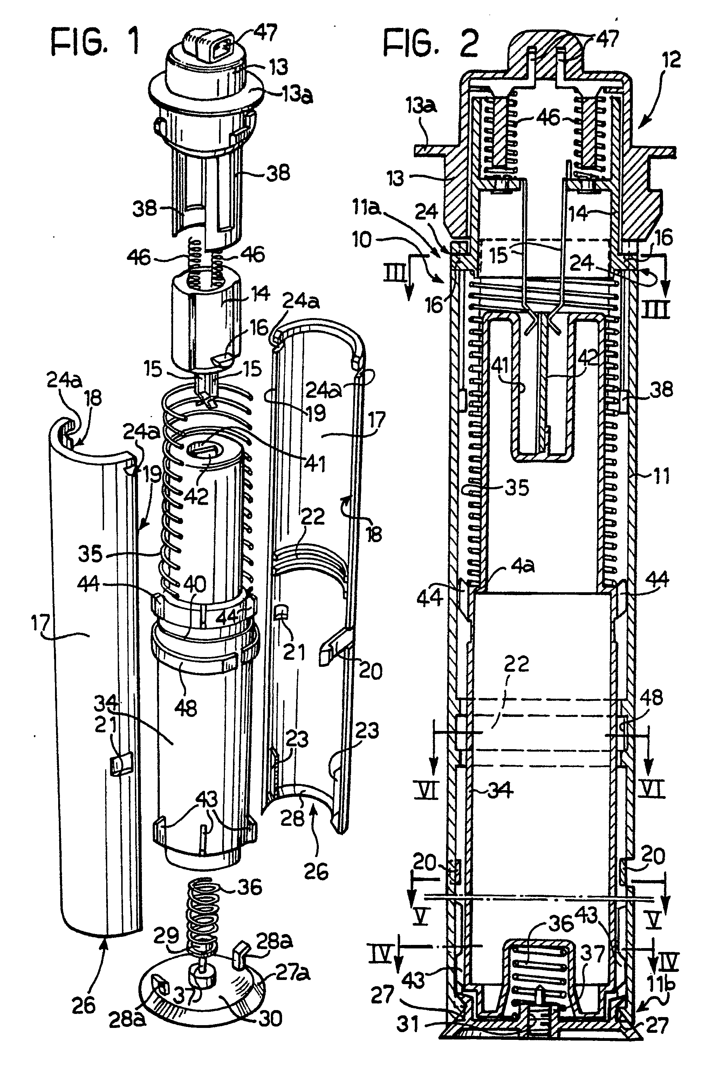

To the end 11b of the tubular member 11 is fitted a closure base 30 having a peripheral frusto-conical surface 27a of a shape complementary to that of the frusto-conical surface 27 of the edge 26 of the tubular member 11. Adjacent the frusto-conical surface 27a, the base 30 has axial appendages 28a in the form of resilient hooks which cooperate with the frusto-conical surface 28, in the manner illustrated in Figure 2, to retain the base itself. The latter also has a central axial threaded hole 31. Within the tubular member 11 is a cylindrical float 34 which is acted upon by an upper spring 35 at its upper end and by a calibration spring 36 at its lower end. The spring 36 is calibrated by means of a screw 37 engaged in a threaded seat 31 and acting axially on a cup 29 on which the lower end of the spring 36 bears. The spring 35 acts in its turn between an annular shoulder 40 of the float 34 and the radial projections 16 of the cylindrical slider 14.

At its upper end, the float 34 has a recess 41 in which is fixed a flat resistor 42 disposed axially and cooperating with the two sliding blades 15 supported by the slider 14, in order to provide, in use, an electrical signal indicative of the vertical movement of the float 34 and hence of the fuel level.

The float 34 has lower radial tabs 43 and upper radial tabs 44 which serve both to centre the float 34 within the tubular member 11 and to cooperate with the ribs 23, as shown in Figure 4 and as described below.

During assembly of the fuel gauge 10, the tubular slider 14 is inserted in the cavity in the stopper 13 with the interposition of the springs 46, the detachment of the slider 14 being prevented by axial lugs 38 in which the radial projections 16 of the slider 14 slide. After the notches 24a of the portion 17 have been made to correspond with the radial projections 16 of the slider 14 and the frusto-conical surface 27 of the edge 26 has been brought into correspondence with the corresponding surface 27a of the base 30, the edges 18 and 19 of the portions 17 are made to mate after the prior snap-engagement of the hooks 20 in the corresponding apertures 21. During this stage, a resilient split ring 48 is introduced into the seats 22 around the float 34. After assembly, the gauge 10 may be inserted vertically in a suitable hole in the tank of a motor vehicle, the flange 13a of the stopper 13 being fixed to the upper wall of the tank (not illustrated).

In the event of a strong force on the base 30 by the bottom of the tank, for example following a collision, the two complementary conical surfaces 27 and 27a of the portions 17 and the base 30 respectively cooperate with each other in order to force the two portions 17 apart, consequently causing the breakage of one or both resilient hooks 20. By virtue of the engagement between the ribs 23 and the radial tabs 43, one of the two portions 17 carries the float 34 with it to prevent the float 34 from exerting a force on the stopper 13 should there be considerable upward flexure of the bottom of the tank, thus preventing the stopper from coming out of its appropriate seat in the upper wall of the tank. The separation of the two portions 17 after breakage of the hooks 20 is facilitated by the resilient split ring 48; this ring in fact acts to separate the two portions 17.

In the case of slight flexure of the bottom of the tank due to the weight of the fuel therein or any thermal expansion, the base 30 remains in contact with the bottom, the tubular member 11 being movable axially relative to the stopper 13 due to telescopic sliding of the slider 14 in the recess in the stopper 13. The fluid pressure which would tend to keep the tubular member 11 in the upper travel limit position, as illustrated in Figure 2, is opposed by the two springs 46. Furthermore, the possibility of axial sliding of the slider 14 and the tubular member 11 relative to the stopper 13 enables the gauge 10 to be fitted to tanks of different heights without the need for prior adaptations or modifications.

## Claims

1. Electric fuel gauge, particularly for tanks of plastics material, comprising:
   - a tubular support member (11) having a length corresponding substantially to the height of a tank and intended to be located vertically within the tank in use, the tubular member (11) having means (13, 14, 16, 24) at its upper end (11a) for fixing it to the tank,
- a float (34) slidable axially within the tubular member (11), and
- a rheostat comprising a resistor (42) and a sliding contact unit (15) cooperating with each other and movable relative to each other as a result of the vertical movement of the float (34) in order to provide an electrical signal indicative of the fuel level, characterised in that the tubular member (11) can open up as a result of the application of an axial compressive load of a magnitude greater than a predetermined threshold.

2. Gauge according to Claim 1, characterised in that the bottom end (11b) of the tubular member (11) has an associated pusher member (30) which is movable axially into the tubular member (11) to force the walls (17) radially outwardly as a result of the application of an axial compressive load.

3. Gauge according to Claim 2, characterised in that the pusher member is constituted by a frusto-conical base (30) cooperating with a complementary annular surface (27) of the bottom end (26) of the tubular member (11).

4. Gauge according to Claim 3, characterised in that the tubular member (11) has at least one longitudinal slit which extends for its entire length and the edges (18, 19) of which are kept in contact by joining means (20, 21) prearranged to be breakable.

5. Gauge according to Claim 4, characterised in that the tubular member (11) has resilient separating means (48) urging the edges (18, 19) of the slit apart.

6. Gauge according to Claim 5, characterised in that the resilient separating means are constituted by a resilient split ring (48) housed coaxially with the tubular member (11).

7. Gauge according to Claims 4 to 6, characterised in that tubular member (11) is constituted by two semi-cylindrical portions (17) joined together by the joining means (20,21) so as to separable radially.

8. Gauge according to Claim 7, characterised in that one of the two portions has hook means (23) which cooperate with complementary catch means (43, 44) of the float (34) to draw the latter radially during separation of the two semi-cylindrical portions (17).

9. Gauge according to Claim 7 or Claim 8, characterised in that the axial edges (18, 19) of the semi-cylindrical portions (17) have complementary engagement surfaces.

10. Gauge according to any one Claims 7 to 9, characterised in that the joining means comprise shearable members (20,21) for mutual engagement between the two semi-cylindrical portions (17).

11. Gauge according to Claim 10, characterised in that the members comprise, for each portion (17), at least one resilient hook (20) and a seat (21) located in correspondence with the axial edges (18, 19) for snap-engagement during assembly with a corresponding complementary seat (21) and a corresponding complementary hook (20), respectively, of the facing portion.

12. Gauge according to any one of the preceding claims, characterised in that the means for fixing it to the tank comprise a hollow stopper (13) fixable to the upper wall of the tank and a slider (14) slidable telescopically in the stopper and carrying the sliding contact unit (15) of the rheostat, the slider (14) being fixed to the tubular member (11) and being acted upon by resilient means (46) biassing it axially away from the tubular member (11) relative to the stopper (13).

**Revendications**

1. Jauge électrique de carburant, en particulier pour réservoirs en matériau plastique, comprenant :
- un élément de support tubulaire (11) ayant une longueur correspondant sensiblement à la hauteur d'un réservoir et destiné à être positionné verticalement à l'intérieur du réservoir lors de son utilisation, l'élément tubulaire (11) ayant des moyens (13, 14, 16, 24) à son extrémité supérieure (11a) pour le fixer au réservoir,
- un flotteur (34) coulissant axialement à l'intérieur de l'élément tubulaire (11), et
- un rhéostat comprenant une résistance (42) et une unité coulissante de contact (15) coopérant l' une avec l'autre et mobiles l'une par rapport à l'autre sous l'effet du mouvement vertical du flotteur (34) pour fournir un signal électrique représentatif du niveau de carburant, caractérisée en ce que l'élément tubulaire (11) peut s'ouvrir sous l'effet de l'application d'une charge de compression axiale ayant une valeur supérieure à un seuil prédéterminé.

2. Jauge selon la revendication 1, caractérisée en ce que l'extrémité inférieure (11b) de l'élément tubulaire (11) comporte un poussoir associé (30) qui est mobile axialement dans l'élément tubulaire (11) pour contraindre les parois (17) à s'écarter radialement vers l'extérieur sous l'effet de l'application d'une charge de compression axiale.

3. Jauge selon la revendication 2, caractérisée en ce que le poussoir est constitué par une base tronconique (30) coopérant avec une surface annulaire complémentaire (27) de l'extrémité inférieure (26) de l'élément tubulaire (11).

4. Jauge selon la revendication 3, caractérisée en ce que l'élément tubulaire (11) comporte au moins une fente longitudinale qui s'étend sur toute sa longueur et dont les bords (18, 19) sont maintenus en contact par des moyens de jonction (20, 21) préalablement agencé pour pouvoir se rompre.

5. Jauge selon la revendication 4, caractérisée en ce que l'élément tubulaire (11) comporte un moyen de séparation élastique (48) écartant les bords (18, 19) de la fente.

6. Jauge selon la revendication 5, caractérisée en ce que les moyens de séparation élastiques sont constitués par une bague fendue élastique (48) logée coaxialement dans l'élément tubulaire (11).

7. Jauge selon les revendications 4 à 6, caractérisée en ce que l'élément tubulaire (11) est constitué par deux parties semi-cylindriques (17) jointes l'une à l'autre par les moyens de jonction (20, 21) de façon à ce qu'elles puissent être séparées radialement.

8. Jauge selon la revendication 7, caractérisée en ce que l'une des deux parties comporte un moyen d'accrochage (23) qui coopère avec des moyens de prises complémentaires (43, 44) du flotteur (34) pour entraîner ce dernier radialement lors de la séparation des deux parties semi-cylindriques (17).

9. Jauge selon la revendication 7 ou 8, caractérisée en ce que les bords axiaux (18, 19) des parties semi-cylindriques (17) ont des surfaces d'emboîtement complémentaires.

10. Jauge selon l'une quelconque des revendications 7 à 9, caractérisée en ce que les moyens de jonction comprennent des éléments déchirables (20, 21) permettant un emboîtement mutuel entre les deux parties semi-cylindriques (17).

11. Jauge selon la revendication 10, caractérisée en ce que les éléments comprennent, pour chaque partie (17), au moins un crochet élastique (20) et un siège (21) disposés de façon à correspondre aux bords axiaux (18, 19) pour un encliquetage lors de l'assemblage avec, respectivement, un siège complémentaire correspondant (21) et un crochet complémentaire correspondant (20) de la partie opposée.

12. Jauge selon l'une quelconque des revendications précédentes, caractérisée en ce que les moyens permettant sa fixation au réservoir comprennent un bouchon creux (13) pouvant être fixé à la paroi supérieure du réservoir et un coulisseau (14) pouvant coulisser télescopiquement dans le bouchon et portant l'unité coulissante de contact (15) du rhéostat, le coulisseau (14) étant fixé à l'élément tubulaire (11) et étant sollicité par un moyen élastique (46) l'écartant axialement de l'élément tubulaire (11) par rapport au bouchon (13).

## Patentansprüche

1. Elektrischer Kraftstoffvorratsfühler, insbesondere für Kraftstoffbehälter aus Kunststoff, bestehend aus

einem rohrförmigen Trägerkörper (11), der für seinen bestimmungsgemäßen Einsatz senkrecht in dem Kraftstoffbehälter angeordnet werden kann und dessen Länge im wesentlichen der Höhe des Kraftstoffbehälters entspricht, wobei an dem oberen Ende (11a) des rohrförmigen Trägerkörpers (11) Mittel (13, 14, 16, 24) zu seiner Befestigung an dem Kraftstoffbehälter vorgesehen sind,

einem Schwimmer (34), der in dem rohrförmigen Trägerkörper (11) in axialer Richtung gleiten kann, und

einem Regelwiderstand, bestehend aus einem Widerstandselement (42) und einer Schleifkontakteinheit (15), die zusammenwirken und durch eine Vertikalbewegung des Schwimmers (34) relativ zueinander bewegbar sind, wobei sie ein elektrisches Signal liefern, das für das Kraftstoffniveau kennzeichnend ist,

**dadurch gekennzeichnet,**
daß der rohrförmige Trägerkörper (11) sich bei Einwirkung einer einen vorbestimmten Schwellenwert überschreitenden axialen Druckbelastung öffnen kann.

2. Kraftstoffvorratsfühler nach Anspruch 1, dadurch gekennzeichnet, daß dem unteren Endbereich (11b) des rohrförmigen Trägerkörpers (11) ein Drückerteil (30) zugeordnet ist, das unter der Einwirkung einer axialen Druckbelastung axial in den rohrförmige Trägerkörper (11) hineinbewegbar ist, um dessen Wände (17) radial nach außen zu drücken.

3. Kraftstoffvorratsfühler nach Anspruch 2, dadurch gekennzeichnet, daß das Drückerteil aus einer kegelstumpfförmigen Basis (30) besteht, die mit einer komplementären ringförmigen Fläche (27) am unteren Ende (26) des rohrförmige Träger-körpers (11) zusammenwirkt.

4. Kraftstoffvorratsfühler nach Anspruch 3, dadurch gekennzeichnet, daß der rohrförmige Trägerkörper (11) wenigstens einen Längsschlitz aufweist, der sich über seine gesamte Länge erstreckt und dessen Kanten (18, 19) durch Verbindungsmittel (20, 21) in Kontakt gehalten werden, die als Sollbruchkörper ausgebildet sind.

5. Kraftstoffvorratsfühler nach Anspruch 4, dadurch gekennzeichnet, daß der rohrförmige Trägerkörper (11) ein federndes Trennmittel (48) aufweist, das die Kanten (18, 19) des Längsschlitzes auseinandertreibt.

6. Kraftstoffvorratsfühler nach Anspruch 5, dadurch gekennzeichnet, daß das federnde Trennmittel aus einem geschlitzten Federring (48) besteht, der koaxial zu dem rohrförmigen Trägerkörper (11) in diesem aufgenommen ist.

7. Kraftstoffvorratsfühler nach Anspruch 4 bis 6, dadurch gekennzeichnet, daß der rohrförmige Trägerkörper (11) aus zwei halbzylindrischen Teilen (17) besteht, die durch die genannten Verbindungsmittel (20, 21) derart miteinander verbunden sind, daß sie in radialer Richtung trennbar sind.

8. Kraftstoffvorratsfühler nach Anspruch 7, dadurch gekennzeichnet, daß eines der beiden Teile Verhakungsmittel (23) aufweist, die mit komplementären Verriegelungsmitteln (43, 44) des Schwimmers (34) zusammenwirken, um letzteren beim Trennen der beiden halbzylindrischen Teile (17) in radialer Richtung mitzuziehen.

9. Kraftstoffvorratsfühler nach Anspruch 7 oder 8, dadurch gekennzeichnet, daß die axialen Kanten (18, 19) der halbzylindrischen Teile (17) komplementäre Verbindungsflächen haben.

10. Kraftstoffvorratsfühler nach einem der Ansprüche 7 bis 9, dadurch gekennzeichnet, daß die Verbindungsmittel abscherbare Elemente (20, 21) für den gegenseitigen Eingriff zwischen den beiden halbzylindrischen Teilen (17) umfassen.

11. Kraftstoffvorratsfühler nach Anspruch 10 dadurch gekennzeichnet, daß die abscherbaren Elemente für jeden Teil (17) des rohrförmigen Trägerkörpers aus wenigstens einem federnden Haken (20) und einem Sitz (21) bestehen, die im Bereich der axialen Kanten (18,19)so angeordnet sind, daß sie beim Zusammenbau eine Schnappverbindung mit einem korrespondierenden komplementären Sitz (21) bzw. einem korrespondierenden komplementären Haken (20) des gegenüberliegenden Teils bilden.

12. Kraftstoffvorratsfühler nach einem der vorhergehenden Ansprüche, dadurch gekennzeichnet, daß die Mittel zu seiner Befestigung an dem Kraftstoffbehälter einen an der oberen Wand des Kraftstoffbehälters befestigbaren hohlen Stöpsel (13) sowie ein Gleitstück (14) umfassen, das in dem Stöpsel teleskopisch gleiten kann und die Schleifkontakteinheit (15) des Regelwiderstands trägt, wobei das Gleitstück (14) an dem rohrförmigen Trägerkörper (11) befestigt ist und unter der Einwirkung von federnden Mitteln (46) steht, die es relativ zu dem Stöpsel (13) in von dem rohrförmigen Trägerkörper (11) wegführender axialer Richtung vorspannen.

FIG. 1

FIG. 2

FIG. 3

FIG. 4

FIG. 5

FIG. 6